# EUROPÄISCHE PATENTSCHRIFT

(11) **EP 0 911 548 B1**
(45) Veröffentlichungstag und Bekanntmachung des Hinweises auf die Patenterteilung: **16.08.2001**
(21) Anmeldenummer: 98117025.1
(22) Anmeldetag: 09.09.1998
(51) Int. Cl.: F16H 59/02, B60K 20/02

(54) **Getriebeschaltbetätigung für Kraftfahrzeuge**
Transmission shift actuator for automotive vehicles
Actionneur pour boîte de vitesses d'automobiles

(30) Priorität: 21.10.1997 DE 19746438
(43) Veröffentlichungstag der Anmeldung: 28.04.1999
(73) Patentinhaber: Bayerische Motoren Werke Aktiengesellschaft, 80788 München (DE)
(72) Erfinder: Biskup, Ernst, 82223 Eichenau (DE)

(56) Entgegenhaltungen:
- EP-A- 0 695 664
- US-A- 4 732 232
- US-A- 5 161 422
- US-A- 5 617 929

## Beschreibung

Die Erfindung bezieht sich auf eine Getriebeschaltbetätigung für Kraftfahrzeuge, wie sie im Oberbegriff des Hauptanspruchs beschrieben ist.

Bei den derzeit auf dem Markt befindlichen Fahrzeugen, insbesondere Personenkraftfahrzeugen werden zu einem überwiegenden Teil die einzelnen Gänge des Fahrzeuggetriebes mit einem Schalthebel auf der Mittelkonsole des Fahrzeuges eingelegt. Der Schalthebel ist dabei in aller Regel über Zwischenglieder mechanisch mit den eigentlichen Schaltgliedem im Getriebe verbunden. Das kann zu Akustikproblemen führen, da über die Lagerung des Schalthebels Aggregatsgeräusche z.B. vom Getriebe oder Motor in den Fahrzeuginnenraum übertragen werden. Des weiteren wird bei zunehmenden Komfortansprüchen an Kraftfahrzeuge der Platz im Bereich der Mittelkonsole dringend für andere Bauteile wie Telefon usw. gebraucht. Schließlich verbietet die feste Anordnung des Schalthebels auf der Mittelkonsole individuelle, auf die Größe des Fahrzeuglenkers abgestimmte Einstellmöglichkeiten.

Des weiteren werden in zunehmendem Maße Getriebeschaltbetätigungen in Fahrzeugen verwendet, die nach dem Prinzip des "Shift by wire" arbeiten. Hier ist der Schalthebel nicht mehr mechanisch mit dem Getriebe verbunden, sondern er löst bei seinem Betätigen elektrische Steuersignale aus, die von einer elektronischen Getriebesteuereinheit in Befehle für die Schaltglieder des Getriebes umgesetzt werden. Der Schalthebel kann bei solchermaßen gesteuerten Getrieben als "Joy stick" ausgelegt sein, der durch Verschwenken in verschiedene Richtungen entsprechende elektrische Kontakte zur Erzeugung der Steuersignale schaltet. Schaltbetätigungen dieser Art überwinden zu einem großen Teil die zuvor aufgezeigten Nachteile.

Aus der US-A-5 617 929 ist eine Schaltbetätigung vornehmlich für Lastkraftwagen bekannt, bei der ein Schalthebel in einem Schaltbock verschiebbar gelagert ist. Dabei kann der Schalthebel elektrische Schalter betätigen, die wiederum Schaltsignale für das elektronische Steuern des Fahrzeuggetriebes abgeben. Der Schaltbock ist fest mit einem verstellbaren Sitzrahmen verbunden, so dass er jede Sitzverstellbewegung in gleichem Maße mitmacht. Darüber hinaus kann der Schaltbock eine Gebrauchslage einnehmen, in der ein Fahrer den Schalthebel während des normalen Fahrbetriebs betätigt. Von dieser Gebrauchslage lässt sich der Schaltbock über pneumatische Stellglieder in eine Ruhelage zurückziehen. In dieser Lage erlaubt der Schaltbock den ungehinderten Durchstieg zu den hinteren Teilen der Fahrerkabine. Eine Betätigung des Schalthebels in dieser Lage wäre, wenn auch mit Schwierigkeiten, gegeben.

Demgegenüber sieht die US 5 161 422 eine abnehmbare Schaltbetätigung vor. Dabei wird bei dieser Lösung das Einlegen der einzelnen Gänge des Getriebes wiederum über elektrische Schaltsignale gesteuert. Der Fahrer kann die Schaltbetätigung vollständig von einem Sockel trennen und mitnehmen. Ein Einlegen der Gänge ist dadurch nicht mehr möglich. Andererseits muss der Fahrer jedoch die Schaltbetätigung mit sich herumtragen oder an einem sicheren Ort verwahren, was wiederum dazu führen kann, dass er sie nicht mehr auffindet oder einfach vergisst, sie mit zum Fahrzeug zurückzunehmen.

Aufgabe der Erfindung ist es, eine Getriebeschaltbetätigung für Kraftfahrzeuge unter Umgehung der vorstehenden Nachteile in Richtung Bedienerfreundlichkeit weiterzubilden.

Die Aufgabe wird erfindungsgemäß mit den kennzeichnenden Merkmalen des Hauptanspruchs gelöst. Vorteilhafte Ausgestaltungen der Erfindung ergeben sich aus den Unteransprüchen.

Nach der Erfindung kann die Getriebeschaltbetätigung zwei Positionen einnehmen, eine Gebrauchslage, in der der Fahrzeuglenker die Gänge schalten kann, und eine Ruhelage bei nicht benutztem Fahrzeug. Diese Maßnahme birgt mehrere Vorteile. Einmal läßt sich - je nach Auslegung - die Gebrauchslage individuell einstellen. Dabei kann jeder Fahrzeuginsasse seine eigene Position festlegen und - bei entsprechender elektronischer Ansteuerung - in Form einer Memoryfunktion abrufen. Die Ruhelage der Schaltbetätigung ist andererseits so gewählt, daß ein Zugang verwehrt und auf diese Weise das Fahrzeug gegen Diebstahl gesichert ist.

In einfacher Weise läßt sich die Getriebeschaltbetätigung von Hand in die jeweilige Lage bewegen. Komfortabler und vorteilhafter kann diese Arbeit auch ein kraftbetätigtes Stellglied, wie z.B. ein Elektromotor übernehmen. In diesem Fall bietet es sich weiter an, den Elektromotor über einen Zündanlaßschalter anzusteuern. Dies kann zum einen in der Weise geschehen, daß mit Einstecken bzw. Abziehen des Zündschlüssels die Schaltbetätigung in die entsprechende Position verfährt. Ebenso ist dies bei einer bestimmten Stellung des Zündschlüssels im Zündschloß möglich oder aber die Verlagerungsbewegung wird über einen Funksignale aussendenden Zündschlüssel ausgelöst. Ebenso sind Kombinationen möglich, beispielsweise fährt die Schaltbetätigung beim Abziehen des Zündschlüssels in ihre Ruhelage und wird durch ein Funksignal zum Verlagern in die Gebrauchslage veranlaßt. Auch hier kann die Memoryfunktion über das Funksignal realisiert sein.

Da die Schaltbetätigung nicht mechanisch mit dem Fahrzeuggetriebe verbunden ist, läßt sie sich an beliebigen Orten im Fahrzeuginnenraum vorsehen. Zweckmäßigerweise ist sie einer Armlehne eines Fahrzeugsitzes zugeordnet, da sie auf diese Weise für den Fahrzeuglenker ohne große Armbewegungen erreichbar ist. In einer vorteilhaften Ausführung ist sie in der Armlehne geführt, das heißt, in Gebrauchslage ist sie frei zugänglich, während sie sich in der Ruhelage unzugänglich in der Armlehne befindet.

Ebenso zweckmäßig kann es sein, die Schaltbetätigung am Armaturenbrett des Fahrzeug entweder verschiebbar oder klappbar anzuordnen. In beiden Fällen ist es jedoch, um in den Genuß einer Diebstahlsicherung zu kommen, vorteilhaft, sie in der Ruhelage wiederum unzugänglich im Armaturenbrett unterzubringen.

Weitere Vorteile der Erfindung ergeben sich aus der nachfolgenden Beschreibung mehrerer Ausführungsbeispiele und aus der dazu gehörenden Zeichnung. Die Zeichnung zeigt dabei in
- Fig. 1: eine erfindungsgemäße Getriebeschaltbetätigung, verschiebbar in einer Armlehne eines Fahrzeugsitzes angeordnet,
- Fig. 2: die Getriebeschaltbetätigung nach Fig. 1 in einem Armaturenbrett eines Fahrzeuges verschiebbar gehalten,
- Fig. 2a: die Getriebeschaltbetätigung nach Fig. 2, in ihre Ruhelage hochklappbar und
- Fig. 2b: die gleiche Getriebeschaltbetätigung, in Draufsicht und in horizontaler Richtung schwenkbar gelagert.

Die in den einzelnen Figuren sich entsprechenden Teile sind mit der jeweils gleichen Bezugsziffer belegt.

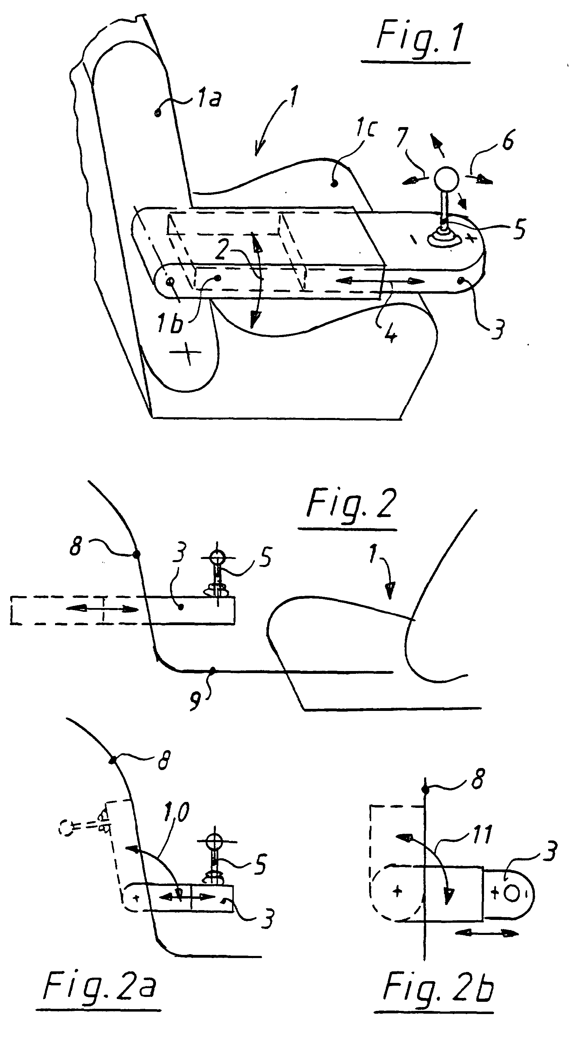

In der schematischen Darstellung nach Fig. 1 ist ein Fahrzeugsitz 1 eines nicht näher dargestellten Kraftfahrzeuges skizziert. An der einen Seite einer Rückenlehne 1a des Fahrzeugsitzes ist schwenkbar eine Armlehne 1b gelagert. DieVerschwenkbarkeit deutet ein Doppelpfeil 2 an. Die Armlehne 1b ist in ihre horizontale Gebrauchslage geschwenkt und nimmt in ihrer Längsrichtung verschiebbar eine Getriebeschaltbetätigung 3 auf. Die Verschiebbarkeit ist wiederum mit einem Doppelpfeil 4 gekennzeichnet.

Die Getriebeschaltbetätigung 3 weist an ihrer Oberseite einen Schalthebel 5 in Form eines "Joy stick" auf, der in mehrere Richtungen bewegt werden kann. In der Fig. 1 ist lediglich ein Vor- und Zurückbewegen in Längsrichtung der Armlehne 1b und damit in und gegen die Fahrtrichtung durch weitere Pfeile 6 und 7 dargestellt. Es sind aber auch senkrecht und schräg dazu ausgerichtete Bewegungsrichtungen bei einer entsprechenden Auslegung des Schalthebels 5 darstellbar. Außerdem läßt sich der Wählhebel, in der Fig. 1 nicht erkennbar, durch Verschieben in seiner Längsrichtung in der Getriebeschaltbetätigung 3 vollständig versenken.

Nach Fig. 1 ist die Getriebeschaltbetätigung 3 in ihrer Gebrauchslage gezeigt, das heißt, sie ist zu einem großen Teil aus der Armlehne 1b herausgezogen. Ein Fahrzeuglenker, der auf einem Sitzkissen 1c des Fahrzeugsitzes 1 Platz genommen hat, kann bequem den Schalthebel 5 betätigen. Dabei kann er die Getriebeschaltbetätigung 3 je nach seinen Körperabmessungen mehr oder weniger weit, in die für ihn komfortabelsten Stellung aus der Armlehne 1b herausziehen und gegebenenfalls in dieser Position arretieren. Wie eingangs bereits erwähnt, kann dies auch über geeignete Stellglieder und gegebenenfalls über eine Memoryfunktion elektrisch oder sonstwie erfolgen.

Der Vollständigkeit halber sei darauf hingewiesen, daß der Schalthebel 5 keine direkte mechanische Verbindung zum Fahrzeuggetriebe hat. Er schaltet vielmehr bei seiner Betätigung elektrische Kontakte, deren Schaltsignale von einer elektronischen Getriebesteuereinheit verarbeitet werden. Die Getriebesteuereinheit veranlaßt über Stellglieder das Einlegen der gewünschten Fahrstufe.

Wie bereits erwähnt, läßt sich die Getriebeschaltbetätigung verschieben und nach vollständigem Absenken des Schalthebels vollständig in der Armlehne 1b verstauen. In dieser Lage, sie stellt entsprechend der Erfindung die Ruhelage dar, ist der Zugang zum Schalthebel 5 von außen versperrt. Das Fahrzeug kann daher nicht mehr gefahren werden, das heißt, es können keine Fahrstufen eingelegt werden, so daß das Fahrzeug insgesamt vor unbefugtem Gebrauch geschützt ist.

In Fig. 2 ist wiederum ein Fahrzeugsitz 1 erkennbar, allerdings gegenüber Fig. 1 um 180 Grad gedreht. In einem gewissen Abstand vor dem Fahrzeugsitz 1 ist eine Armaturentafel 8 angedeutet, die wiederum eine Getriebeschaltbetätigung 3 aufnimmt. Die Getriebeschaltbetätigung 3 läßt sich horizontal in die Armaturentafel einschieben. Sie befindet sich nach Fig. 2 in ihrer ausgezogenen Gebrauchslage oberhalb eines Tunnels 9 des Fahrzeugbodens. Ihn ähnlicher Weise wie in Fig. 1 kann die Getriebeschaltbetätigung vollständig in das Armaturenbrett eingeschoben werden, um so - in der Ruhelage - den Zugang verhindern.

Während in Fig. 2 die Verlagerung der Getriebeschaltbetätigung von der Gebrauchslage in die Ruhelage horizontal in Fahrzeuglängsrichtung erfolgt, geschieht dies nach Fig. 2a durch Hochklappen entsprechende dem Doppelpfeil 10 in die gestrichelt gezeichnete Ruhelage. Nach Fig. 2b, die eine Draufsicht gegenüber der Fig. 2a darstellt, läßt sich die Getriebeschaltbetätigung horizontal seitlich in die Ruhelage verschwenken. Die Verschenkmöglichkeit in die wiederum gestrichelt dargestellte Ruhelage kennzeichnet ein weiterer Doppelpfeil 11.

## Patentansprüche

1. Getriebeschaltbetätigung (3) für Kraftfahrzeuge mit einem vom Lenker des Kraftfahrzeuges zu bedienenden Schalthebel (5), die je nach gewählter Fahrstufe des Getriebes über die Betätigung elektrischer Kontakte entsprechende Steuerimpulse zu einer Steuereinheit sendet, die über Schaltglieder das Einlegen der gewünschten Fahrstufe im Getriebe bewirkt, dadurch gekennzeichnet, daß die Getriebeschaltbetätigung (3) unter Beibehaltung der Zuordnung von Schalthebel und elektrischer Kontakte von einer Gebrauchslage für das Anwählen der Fahrstufen in eine Ruhelage bei nicht benutztem Fahrzeug verfahrbar ist, wobei die Getriebeschaltbetätigung (5) sich in der Ruhelage in einer derartigen Position befindet, die ein Anwählen der einzelnen Fahrstufen verhindert.

2. Schaltbetätigung nach Anspruch 1, dadurch gekennzeichnet, daß ein kraftbetätigtes Stellglied die Schaltbetätigung (3) in die jeweilige Lage bringt.

3. Schaltbetätigung nach Anspruch 1 oder 2, dadurch gekennzeichnet, daß das Verlagern der Getriebeschaltbetätigung (3) über einen Zündanlaßschalter aktiviert wird.

4. Schaltbetätigung nach einem der Ansprüche 1 bis 3, dadurch gekennzeichnet, daß ihre Gebrauchslage über eine Memoryfunktion für die Bedürfnisse des jeweiligen Fahrzeuglenkers festlegbar ist.

5. Schaltbetätigung nach einem der Ansprüche 1 bis 4, dadurch gekennzeichnet, daß sie einer Armlehne (1b) eines Fahrzeugsitzes (1) zugeordnet ist.

6. Schaltbetätigung nach Anspruch 5, dadurch gekennzeichnet, daß sie sich innerhalb der Armlehne (1b) in die jeweilige Lage verschieben läßt.

7. Schaltbetätigung nach einem der Ansprüche 1 bis 4, dadurch gekennzeichnet, daß sie bei einem Verlagern in die Ruhelage in ein Armaturenbrett (8) eines Fahrzeuges einschiebbar oder klappbar ist.

## Claims

1. A gear shift mechanism (3) for motor vehicles comprising a shift lever (5) operated by the vehicle driver and, depending on the chosen gear, transmitting control pulses, corresponding to actuation of electric contacts, to a control unit which engages the desired gear in the transmission via shift elements, characterised in that the gear shift mechanism (3), retaining the association between the shift lever and electric contacts, is movable from a working position for gear selection into an inoperative position when the vehicle is not in use, wherein the gear shift mechanism (5) when inoperative is in a position where individual gears cannot be selected.

2. A shift mechanism according to claim 1, characterised in that a powered actuator moves the shift mechanism (3) into each respective position.

3. A shift mechanism according to claim 1 or Claim 2, characterised in that movement of the shift mechanism (3) is actuated by a combined ignition and starting switch.

4. A shift mechanism according to any of claims 1 to 3, characterised in that its working position can be adjusted via a memory function to the requirements of the individual driver.

5. A shift mechanism according to any of claims 1 to 4, characterised in that it is associated with an arm rest (1b) of a vehicle seat (1).

6. A shift mechanism according to claim 5, characterised in that it can be moved into the respective position inside the arm rest (1b).

7. A shift mechanism according to any of claims 1 to 4, characterised in that when moved into the inoperative position it can be inserted or swung into the dashboard (8) of a vehicle.

## Revendications

1. Actionneur (3) pour boîte de vitesses d'automobile, comportant un levier de changement de vitesse (5) qui peut être manoeuvré par le conducteur du véhicule et, en fonction du rapport sélectionné, actionne des contacts électriques qui envoient des impulsions correspondantes à une unité de commande provoquant, par des organes de commutation, l'engagement de la vitesse sélectionnée,
caractérisé en ce que
l'actionneur de boîte de vitesses (3) peut, tout en maintenant la corrélation entre le levier de changement de vitesse et les contacts électriques, passer d'une position d'utilisation permettant la sélection des rapports à une position de repos quand le véhicule n'est pas utilisé, position de repos dans laquelle l'actionneur (3) empêche la sélection des rapports.

2. Actionneur selon la revendication 1,
caractérisé en ce qu'
un organe de réglage, actionné dynamiquement, amène l'actionneur (3) dans chacune de ses positions.

3. Actionneur selon la revendication 1 ou 2,
caractérisé en ce que
le déplacement de l'actionneur (3) est activé par un contacteur d'allumage.

4. Actionneur selon l'une quelconque des revendications 1 à 3,
caractérisé en ce que
sa position d'utilisation peut être déterminée par une fonction mémoire, en fonction des besoins de chaque conducteur.

5. Actionneur selon l'une quelconque des revendications 1 à 4,
caractérisé en ce qu'
il est associé à un accoudoir (1b) d'un siège de véhicule (1).

6. Actionneur selon la revendication 5,
caractérisé en ce qu'
il peut coulisser à l'intérieur de l'accoudoir (1b) pour venir occuper chaque position.

7. Actionneur selon l'une quelconque des revendications 1 à 4,
caractérisé en ce qu'
il peut, par coulissement ou par basculement, venir en position de repos, à l'intérieur du tableau de bord (8) du véhicule.
